# DEMANDE DE BREVET EUROPEEN

(11) **EP 1 674 342 A2**
(43) Date de publication de la demande: **28.06.2006**
(21) Numéro de dépôt: 05301048.4
(22) Date de dépôt: 13.12.2005
(51) Int. Cl.: B60R 11/02

(54) **Dispositif amovible comportant des moyens de stockage de données agence à l'intérieur d'un véhicule automobile**

(30) Priorité: 23.12.2004 FR 0453162
(71) Demandeur: Renault s.a.s., 92100 Boulogne Billancourt (FR)
(72) Inventeur: Janin, Stéphane, 92350 Le Plessis Robinson (FR); Pinel, Marc, 94000 Créteil (FR)

(57) **Abrégé**

Dispositif comportant des moyens de stockage de données et agencé de façon amovible sur un support localisé au voisinage du poste de conduite d'un véhicule automobile, caractérisé en ce que le dispositif comporte un moyen de réglage personnalisé de paramètres de configuration de l'habitacle et en ce qu'au moins une partie des données stockées est de la musique.

## Description

L'invention concerne un dispositif comportant des moyens de stockage de données agencé de façon amovible sur un support localisé au voisinage du poste de conduite d'un véhicule automobile.

Il existe une demande croissante pour que les véhicules automobiles soient plus ergonomiques et plus pratiques pour les utilisateurs. Pour répondre à ce besoin, il devient nécessaire de personnaliser au maximum l'habitacle du véhicule, en y intégrant en particulier les réglages préférés de l'utilisateur, et de proposer un grand nombre de fonctions et de prestations. Cependant, il faut que ces nouvelles fonctionnalités, tout en restant faciles à utiliser, emploient le moins d'espace possible à l'intérieur de l'habitacle.

On connaît par la publication n° FR-A-2842921 un système de réglage personnalisé d'environnement de conduite à l'intérieur d'un véhicule automobile dans lequel une carte-mémoire portable est insérée dans un lecteur de façon à permettre le réglage de paramètres préalablement enregistrés. Les données de réglage peuvent être téléchargées par l'intermédiaire de moyens sans fils depuis une source éloignée du véhicule.

Cependant, ce dispositif ne permet de stocker qu'un certain type de données, en particulier de réglage d'accessoires de l'habitacle du véhicule mais ne permet pas de stocker de la musique, par exemple,

De plus ce dispositif nécessite l'utilisation d'un lecteur à part en entière, qui présente un certain encombrement.

Enfin, ce dispositif ne propose qu'un type d'utilisation.

Afin de pallier ces inconvénients, l'invention a pour objet un dispositif amovible comportant des moyens de stockage de données permettant de stocker plusieurs types de données pour le réglage personnalisé de l'environnement du conducteur à l'intérieur du véhicule.

L'invention a aussi pour objet un dispositif ergonomique et compact proposant de nombreuses fonctionnalités.

A cet effet, l'invention propose un dispositif du type cité ci-dessus, caractérisé en ce que le dispositif comporte un moyen de réglage personnalisé de paramètres de configuration de l'habitacle et en ce qu'au moins une partie des données stockées est de la musique.

Selon d'autres caractéristiques de l'invention:
- Les moyens de stockage de données comportent une zone de mémoire modifiable par un utilisateur du véhicule.
- Les moyens de stockage de données comportent une zone de mémoire inaccessible par un utilisateur du véhicule.
- Le dispositif comporte en outre au moins un moyen de commande d'une fonction du véhicule.
- Le dispositif comporte un écran de visualisation d'informations.
- Le dispositif comporte une prise prévue pour la connexion d'écouteurs.
- Le dispositif comporte un moyen de connexion coopérant avec un moyen de réception complémentaire du support, de façon à permettre la connexion électrique du dispositif ainsi que la transmission de données informatiques à une unité centrale du véhicule.
- Le moyen de réglage personnalisé comporte un moyen de sélection, en fonction d'un utilisateur donné, d'au moins une configuration de l'habitacle préalablement mémorisée.
- La configuration préalablement mémorisée comporte la sélection d'au moins une musique donnée.
- La configuration préalablement mémorisée comporte la sélection d'une position donnée d'un siège.
- La configuration préalablement mémorisée comporte un accès à au moins un site Internet donné.
- Le moyen de commande d'une fonction est un bouton de réglage de volume.
- Le moyen de commande est un moyen de sélection d'une fréquence radio.
- Le moyen de commande est un moyen de contrôle d'un curseur sur un écran.
- Le dispositif est agencé au voisinage d'un volant, de manière que le dispositif soit à portée de main du conducteur.
- Le support est un moyen de sélection de vitesses de façon que le dispositif forme au moins une partie dudit moyen de sélection.
- Au moins une partie des données du dispositif est utilisable de façon autonome lorsque le dispositif est en dehors de son support.
- Le dispositif comporte une façade amovible.
- Le dispositif est connectable à un second élément formant téléphone.
- Dans une première étape d'un procédé de stockage de données sur le dispositif, on retire le dispositif de son support, dans une deuxième étape on connecte le dispositif à un ordinateur indépendant afin de télécharger des données sur les moyens de stockage du dispositif , puis dans une troisième étape on déconnecte le dispositif de l'ordinateur et enfin dans une quatrième étape on reconnecte le dispositif au support afin de transmettre les données mises à jour à une unité centrale du véhicule.
- Des paramètres du véhicule sont stockés dans le dispositif pendant l'utilisation du véhicule.
- Les paramètres du véhicule sont transmis par un réseau distant d'entretien du véhicule.

D'autres caractéristiques et avantages de l'invention apparaîtront à la lecture de la description d'exemples de réalisation d'un dispositif amovible comportant des moyens de stockage en référence aux dessins annexés dans lesquels :
- La figure 1 est une vue en perspective d'un dispositif selon l'invention intégré dans une commande de véhicule.
- La figure 2 est une vue en perspective détaillée du dispositif selon l'invention.

Des éléments identiques ou analogues sont désignés par les mêmes chiffres de référence.

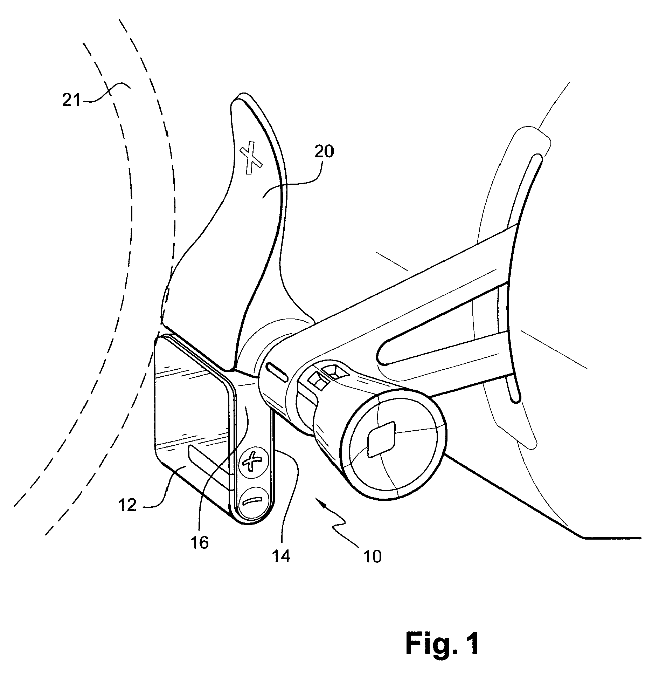

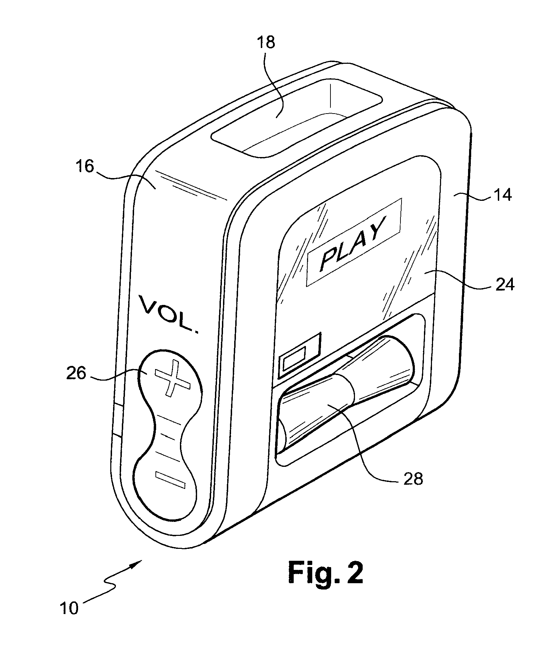

Tel que représenté aux figures 1 et 2, un dispositif 10 comportant des moyens de stockage de données (non représentés) présente deux faces 12 et 14 reliées par des parois latérales 16.

Tel que représenté à la figure 1, lorsque le dispositif 10 est en position d'utilisation à l'intérieur du véhicule, un moyen de connexion 18 situé, dans le mode de réalisation décrit, sur l'une des parois latérales 16 du dispositif 10, est relié à un moyen de réception complémentaire (non représenté) ménagé dans un support 20, de façon à pouvoir assurer à la fois la connexion électrique du dispositif 10 et la transmission de données informatiques à une unité centrale (non représentée) du véhicule.

Le support 20 sur lequel est positionné le dispositif se trouve de préférence au voisinage du poste de conduite. Par exemple, le support 20 est localisé aux alentours d'un volant 21, de façon qu'il soit à portée de main du conducteur, ce qui améliore à la fois l'ergonomie et les conditions de sécurité. On peut prévoir de l'agencer à proximité d'autres commandes du véhicule de façon à profiter de la présence d'une connectique déjà existante. Par exemple, tel que représenté à la figure 1, le support 20 est une commande telle qu'une palette de sélection de vitesses de façon que le dispositif 10 soit ainsi bien intégré dans le poste de conduite.

Les moyens de stockage de données du dispositif 10 comportent une zone de mémoire modifiable.

Ainsi, la zone de mémoire modifiable permet de disposer de moyens de réglage personnalisé de paramètres de configuration de l'habitacle du véhicule. Selon un premier mode de réalisation, chaque utilisateur possède un dispositif 10 individuel contenant ses données propres.

Selon un deuxième mode de réalisation du dispositif, il est prévu un moyen permettant de sélectionner l'utilisateur de façon à activer ses réglages et ses paramètres personnels. Il peut s'agir, par exemple, de sélectionner, à l'aide d'un bouton, une couleur correspondant à un utilisateur donné ou bien d'entrer directement le nom d'un utilisateur. Ainsi, le même dispositif 10 peut être utilisé par plusieurs personnes.

Pour la personnalisation des réglages, différents paramètres de configuration peuvent être mémorisés.

Il peut être prévu un réglage particulier des sièges (non représentés), par exemple. Il peut s'agir de la mémorisation de la configuration du siège du conducteur mais aussi de la mémorisation de celle des autres sièges de l'habitacle. Ce peut être utile dans le cas où, par exemple, l'utilisateur a l'habitude de transporter du matériel et a besoin pour cela que les sièges soient reculés, avancés ou bien rabattus.

On peut également prévoir un réglage particulier du volant 21 ou des rétroviseurs intérieur et extérieurs (non représentés).

Le dispositif 10 offrant la possibilité de stocker de la musique, on peut aussi prévoir la mémorisation de certains morceaux de musique en fonction d'un utilisateur donné.

L'utilisateur peut aussi enregistrer au moins un lien vers un site Internet donnant des informations sur le trafic routier, ou bien sur des horaires de train, de cinéma, etc.

Toutes les données précitées peuvent être enregistrées sur les moyens de stockage au moyen d'un procédé simple. Pour cela il suffit à l'utilisateur dans un premier temps de retirer le dispositif 10 de son support 20 puis de connecter à un ordinateur (non représenté) indépendant du véhicule le moyen de connexion 18 afin de télécharger de la musique et de modifier ses paramètres personnels de réglage. Ensuite l'utilisateur n'a plus qu'a déconnecter le dispositif 10 de l'ordinateur puis à le reconnecter au moyen de réception prévu dans le véhicule pour que les réglages mis à jour soient transmis à l'unité centrale de façon que le nouvel environnement personnalisé de l'utilisateur soit automatiquement mis en place.

Le dispositif 10 comporte en outre au moins un moyen de commande de fonctions du véhicule. Ainsi dans le cas où le dispositif est localisé au voisinage du volant 21, le conducteur dispose de commandes déportées à portée de main. Le dispositif 10 peut également comporter sur l'une de ses faces 12,14 un écran 24 permettant de visualiser des informations telles que le titre d'un morceau de musique ou bien le nom d'une station de radio, par exemple.

Le moyen de commande peut consister en des boutons de réglage 26 du volume sonore ou en des boutons de sélection d'une fréquence radio, situés, par exemple, sur une des parois latérales 16 du dispositif 10 pour une meilleure accessibilité. Le dispositif 10 peut également présenter sur l'une de ses faces 12, 14 un moyen d'accès 28 à une interface multimédia tel qu'un bouton, connu en soi, permettant de déplacer sur l'écran du dispositif 10 ou sur un écran de l'habitacle, un curseur dans différents menus, un appui sur certaines parties du bouton permettant d'effectuer des sélections sur l'écran. Ce bouton peut par exemple présenter la forme d'un « diabolo ». Grâce aux moyens de stockage, l'utilisateur peut alors aussi mémoriser ses stations de radio préférées ou bien le volume sonore moyen auquel il écoute de la musique habituellement.

A l'aide d'une batterie intégrée (non représentée), le dispositif 10 et sa partie mémoire modifiable peuvent aussi être utilisés de façon autonome, lorsque le dispositif 10 est déconnecté, c'est-à-dire lorsque le dispositif 10 n'est pas positionné sur son support 20 à l'intérieur du véhicule ni connecté à un ordinateur. L'écran 24 permet alors d'afficher les différents paramètres déjà enregistrés. L'utilisateur peut alors se servir du bouton 28 d'accès à l'interface multimédia pour visualiser les informations sur l'écran 24. Mais il peut aussi être prévu que l'écran 24 soit tactile de façon que l'utilisateur puisse accéder facilement et intuitivement à l'aide d'un doigt aux informations contenues à l'intérieur du dispositif 10 ou bien qu'il puisse utiliser des fonctions dédiées à l'écoute de musique. Le dispositif 10 est donc simplifié et n'est pas surchargé par de nombreux boutons de commande. Il peut alors comporter une prise pour la connexion d'écouteurs (non représentée) et une façade amovible pour que l'utilisateur puisse personnaliser le dispositif au gré de ses goûts ou de ses envies.

On peut aussi prévoir que le dispositif 10 soit connectable à un élément (non représenté) formant téléphone.

Les moyens de stockage de données peuvent en outre comporter une partie mémoire non accessible par l'utilisateur.

Ainsi, le dispositif 10 peut permettre d'enregistrer des paramètres de fonctionnement ou de roulage du véhicule, tels que la consommation du véhicule, la vitesse, etc... Il peut aussi être prévu pour le réseau d'entretien et de réparation du véhicule, le téléchargement à distance de mises à jour du véhicule ou bien même le rapatriement de données du véhicule.

La zone de mémoire non accessible peut aussi permettre une utilisation du dispositif comme carte de démarrage du véhicule.

Le dispositif 10 présente donc l'avantage de regrouper de nombreuses fonctionnalités telles que le réglage personnalisé de paramètres de l'habitacle, la commande de fonctions du véhicule, le stockage de musique, le démarrage du véhicule, ce qui permet de gagner de la place à l'intérieur de l'habitacle. Par exemple, le stockage de musique à l'intérieur du dispositif 10 permet de ne pas avoir à utiliser un lecteur de disques compacts, voire un chargeur de disques, et évite aussi la manipulation dangereuse de disques pendant la conduite.

De plus, le dispositif 10 est de faible encombrement ainsi que pratique et facile à utiliser. Il présente aussi l'avantage de ne pas encombrer la zone sous volant.

Le mode de réalisation n'est décrit ici qu'à titre d'exemple. Par exemple, un dispositif pourrait très bien être agencé à proximité des passagers afin que chacun puisse profiter de ses réglages personnels, de sa propre musique,etc.

## Revendications

1. Dispositif (10) comportant des moyens de stockage de données et agencé de façon amovible sur un support (20) localisé au voisinage du poste de conduite d'un véhicule automobile, **caractérisé en ce que** le dispositif (10) est apte à activer des paramètres prédéterminés de l'habitacle en fonction d'un utilisateur donné et **en ce qu'**au moins une partie des données stockées sur le dispositif (10) est de la musique.

2. Dispositif (10) selon la revendication 1, **caractérisé en ce que** les moyens de stockage de données comportent une zone de mémoire modifiable par un utilisateur du véhicule.

3. Dispositif (10) selon l'une quelconque des revendications précédentes, **caractérisé en ce que** les moyens de stockage de données comportent une zone de mémoire inaccessible par un utilisateur du véhicule.

4. Dispositif (10) selon l'une quelconque des revendications précédentes, **caractérisé en ce que** le dispositif (10) comporte en outre au moins un moyen de commande d'une fonction du véhicule.

5. Dispositif (10) selon l'une quelconque des revendications précédentes, **caractérisé en ce que** le dispositif (10) comporte un écran (24) de visualisation d'informations.

6. Dispositif (10) selon l'une quelconque des revendications précédentes, **caractérisé en ce que** le dispositif (10) comporte une prise prévue pour la connexion d'écouteurs.

7. Dispositif (10) selon l'une quelconque des revendications précédentes, **caractérisé en ce que** le dispositif (10) comporte un moyen de connexion (18) coopérant avec un moyen de réception complémentaire du support (20), de façon à permettre la connexion électrique du dispositif (10) ainsi que la transmission de données informatiques à une unité centrale du véhicule.

8. Dispositif (10) selon l'une quelconque des revendications précédentes, **caractérisé en ce que** le moyen de réglage personnalisé comporte un moyen de sélection, en fonction d'un utilisateur donné, d'au moins une configuration de l'habitacle préalablement mémorisée.

9. Dispositif (10) selon la revendication précédente, **caractérisé en ce que** la configuration préalablement mémorisée comporte la sélection d'au moins une musique donnée.

10. Dispositif (10) selon l'une quelconque des revendications 8 ou 9 précédentes, **caractérisé en ce que** la configuration préalablement mémorisée comporte la sélection d'une position donnée d'un siège.

11. Dispositif (10) selon l'une quelconque des revendications 8 à 10 précédentes, **caractérisé en ce que** la configuration préalablement mémorisée comporte un accès à au moins un site Internet donné.

12. Dispositif (10) selon l'une quelconque des revendications 4 à 11 précédentes, **caractérisé en ce que** le moyen de commande d'une fonction est un bouton de réglage de volume.

13. Dispositif (10) selon l'une quelconque des revendications 4 à 12 précédentes, **caractérisé en ce que** le moyen de commande est un moyen de sélection d'une fréquence radio.

14. Dispositif (10) selon l'une quelconque des revendications 4 à 13 précédentes, **caractérisé en ce que** le moyen de commande est un moyen de contrôle d'un curseur sur un écran.

15. Dispositif (10) selon l'une quelconque des revendications précédentes, **caractérisé en ce que** le dispositif (10) est agencé au voisinage d'un volant (21), de manière que le dispositif (10) soit à portée de main du conducteur.

16. Dispositif (10) selon la revendication précédente, **caractérisé en ce que** le support (20) est un moyen de sélection de vitesses de façon que le dispositif (10) forme au moins une partie dudit moyen de sélection.

17. Dispositif (10) selon l'une quelconque des revendications précédentes, **caractérisé en ce qu'**au moins une partie des données du dispositif (10) est utilisable de façon autonome lorsque le dispositif (10) est en dehors de son support (20).

18. Dispositif (10) selon l'une quelconque des revendications précédentes, **caractérisé en ce que** le dispositif (10) comporte une façade amovible.

19. Dispositif (10) selon l'une quelconque des revendications précédentes, **caractérisé en ce que** le dispositif (10) est connectable à un second élément formant téléphone.

20. Procédé de stockage de données sur le dispositif (10) selon l'une quelconque des revendications précédentes, **caractérisé en ce que** dans une première étape on retire le dispositif (10) de son support (20), **en ce que** dans une deuxième étape on connecte le dispositif (10) à un ordinateur indépendant afin de télécharger des données sur les moyens de stockage du dispositif (10), puis **en ce que** dans une troisième étape on déconnecte le dispositif (10) de l'ordinateur et enfin **en ce que** dans une quatrième étape on reconnecte le dispositif (10) au support (20) afin de transmettre les données mises à jour à une unité centrale du véhicule.

21. Procédé de stockage de données sur le dispositif (10) selon l'une quelconque des revendications précédentes, **caractérisé en ce que** des paramètres du véhicule sont stockés dans le dispositif (10) pendant l'utilisation du véhicule.

22. Procédé de stockage de données sur le dispositif (10) selon la revendication précédente, **caractérisé en ce que** les paramètres du véhicule sont transmis par un réseau distant d'entretien du véhicule.
